# EUROPÄISCHE PATENTSCHRIFT

(11) **EP 1 754 969 B1**
(45) Veröffentlichungstag und Bekanntmachung des Hinweises auf die Patenterteilung: **25.11.2009**
(21) Anmeldenummer: 06015930.8
(22) Anmeldetag: 31.07.2006
(51) Int. Cl.: G01N 23/04

(54) **Computertomograph und Verfahren zur Untersuchung unterschiedlich großer Objekte**
Computer tomograph and method for examining objects of different sizes
Tomodensitomètre et méthode pour examiner des objects de tailles differentes

(30) Priorität: 03.08.2005 DE 102005036527
(43) Veröffentlichungstag der Anmeldung: 21.02.2007
(73) Patentinhaber: YXLON International X-Ray GmbH, 22419 Hamburg (DE)
(72) Erfinder: Münker, Martin, 58285 Gevelsberg (DE); Rokitta, Oliver, 58256 Ennepetal (DE); Laakel, Faissal, 44801 Bochum (DE)
(74) Vertreter: DTS München

(56) Entgegenhaltungen:
- WO-A-92/06636
- GB-A- 2 232 332
- US-A- 5 493 593
- US-A1- 2004 120 459

## Beschreibung

Die Erfindung befasst sich mit einer Röntgen-CT-Prüfanlage mit einer Röntgenröhre mit einem Fokus, die einen Fächerstrahl oder einen Kegelstrahl erzeugt, der einen Detektor in einem festen Abstand zum Fokus vollständig ausleuchtet, und mit einem Prüfschlitten zur Aufnahme eines zu prüfenden Objekts, der eine senkrecht zum Fächerstrahl rotierbare Rotationsachse aufweist. Darüber hinaus befasst sich die Erfindung mit einem CT-Verfahren zur Prüfung von Objekten, insbesondere unterschiedlicher Größe, mittels einer vorgenannten Röntgen-CT-Prüfanlage.

In der industriellen Computertomographie (CT) sind zwei Prüfverfahren gängig. Zum einen handelt es sich um eine Translations-Rotations-Tomographie und zum anderen um eine Rotations-Tomographie. In beiden Fällen wird vor einem Brennfleck, dem Fokus, einer Röntgenquelle ein Fächerstrahl ausgeblendet, der einen eindimensionalen Detektor vollständig ausleuchtet. Sowohl die Röntgenquelle als auch der Detektor sind ortsfest angeordnet. Zwischen ihnen wird ein zu prüfendes Objekt in den Fächerstrahl eingebracht, das um eine Achse senkrecht zur Ebene des Fächerstrahls rotiert wird, um eine Rekonstruktion des Objekts vornehmen zu können. Der Abstand zwischen Röntgenröhre und Detektor ist veränderlich, ebenso die Position des Objekts, das auf einem Drehteller angeordnet ist, so dass die geometrische Vergrößerung auf die jeweiligen Erfordernisse abgestimmt werden kann. Die einzelnen horizontalen Schichten des Objekts werden dadurch aufgenommen, dass das Objekt oder die Röntgenröhre und der Detektor schrittweise in ihrer Höhe geändert werden. Anstatt der Verwendung eines Fächerstrahls ist es auch möglich, einen Kegelstrahl zu verwenden und diesen auf einen zweidimensionalen Detektor zu projizieren. Dann kann - je nach Größe des Objekts - auf eine schichtweise Abtastung verzichtet werden.

Bei der Rotations-Tomographie wird ein vollständiger Messdatensatz dadurch erzeugt, dass das Prüfobjekt in der Schnittebene vollständig im Fächerstrahl liegt und Projektionen aus mindestens 180° plus Öffnungswinkel des Fächerstrahls aufgenommen werden. Dieses Verfahren ist schnell, jedoch bestimmt die Größe des Strahlenfächers die maximale Größe des in dieser Anordnung tomographierbaren Objekts. Diese Größe wird auch Messkreis genannt. Die Beziehung gilt auch in umgekehrter Richtung, d.h. damit ein größeres Objekt tomographiert werden kann, muss der Messkreis größer werden, also ein Fächerstrahl mit größerem Öffnungswinkel und somit auch ein größerer Detektor verwendet werden. Bei dieser Methode erfordern schon vergleichsweise kleine Objekte große Anlagen mit einem langen Detektor sowie einem großen Abstand zwischen Fokus und Detektor. Technische Beschränkungen resultieren hierbei aus dem maximalen Abstrahlwinkel der Strahlenquelle, der den Öffnungswinkel begrenzt, und der Baugröße des Detektors.

Wenn der Fächerstrahl nicht das gesamte Objekt überdeckt, so kann dieser Fächerstrahl synthetisch verbreitert werden, wahlweise durch seitliches Bewegen des Detektors oder des Objekts. Hierbei handelt es sich um die Translations-Rotations-Tomographie. Dies ist beispielsweise in der GB 2 232 332 A beschrieben. Allerdings muss hier abwechselnd eine lineare und rotative Bewegung erfolgen, was zeitaufwändig ist und zudem für die Querbewegung eine Linearachse erfordert, die über die gesamte Fahrstrecke die rechtwinklige Ausrichtung der Rotationsachse zur Ebene des Fächerstrahls mit einer hohen Genauigkeit sicherstellen muss.

Aus der US 5,493,593 ist eine Röntgen-CT-Prüfanlage bekannt, die einen an unterschiedlichen Orten festlegbaren Prüfschlitten aufweist, der um eine Drehachse rotiert werden kann. Der Prüfschlitten ist zum einen auf der Zentralachse, die von der Röntgenquelle ausgeht und den Detektor senkrecht trifft, festlegbar. Ist der Drehtisch an dieser Stelle angeordnet, erfolgt eine Rotations-Tomographie, wie sie oben beschrieben wurde. Zum anderen kann der Prüfschlitten auch auf einem parallelen zum Detektor zu dem vorgenannten Ort auf der Zentralachse gelegenen Punkt auf der Randachse des Fächerstrahls angeordnet werden. In diesem Fall wird eine - oben noch nicht beschriebene - Halbfächer-Tomographie durchgeführt. Anders als bei der Rotations-Tomographie erhält man hier keine redundanten Daten, da lediglich die Hälfte des Messkreises von dem Prüfschlitten überdeckt wird. Außerdem kann der Prüfschlitten auch an verschiedenen Punkten entlang der Zentralachse festgelegt werden. Aus dieser Patentschrift ist weder bekannt, wie der Prüfschlitten an den jeweiligen Orten festgelegt werden kann, noch wie er von der einen Position in die andere Position gelangt.

Aus der WO 92/06636 ist eine Röntgen-CT-Prüfanlage bekannt, bei der der Prüfschlitten in Form eines Drehtisches in drei zueinander senkrechten Raumrichtungen gemäß den Koordinatenachsen eines karthesischen Koordinatensystems bewegt werden kann.

Wird anstatt eines zweidimensionalen Fächerstrahls ein dreidimensionaler Kegelstrahl verwendet, wird das zur Verfügung stehende Prüfvolumen zwischen dem Fokus der Röntgenquelle und den Ecken des meist eckigen zweidimensionalen Flächendetektors bzw. der Randkontur eines eingesetzten Bildaufnahmegeräts aufgespannt. Ansonsten gelten in analoger Weise die obigen Ausführungen.

Bei einer typischen Größen- und Mengenverteilung von Prüfobjekten - es gibt häufig viele kleine und wenige große Objekte - ist es bislang nötig, eine Prüfanlage so auszulegen, dass die großen Objekte auf alle Fälle geprüft werden können. Daraus resultieren Nachteile hinsichtlich der Baugröße der gesamten Prüfanlage und hinsichtlich der erreichbaren Messzeit.

Aufgabe der Erfindung ist es, eine im Vergleich zur herkömmlichen Bauweise mit dem bekannten Tomographieverfahren betriebene Röntgen-CT-Prüfanlage funktionell zu vereinfachen. Darüber hinaus soll ein solches Gerät auch kompakter sein. Für Weiterbildungen der Erfindung sollen Objekte unterschiedlicher Größe schneller untersucht werden können. Dabei sollen kleine Objekte schnell und große Objekte nur wenig langsamer untersucht werden können.

Die Aufgabe wird durch eine Röntgen-CT-Prüfanlage mit den Merkmalen des Patentanspruchs 1 gelöst. Dadurch, dass der Prüfschlitten innerhalb des Fächerstrahls nahe an einer Randachse, die den Detektor am Rand trifft, festlegbar ist, kann ein Halbfächerverfahren durchgeführt werden. Dieses stellt einen Grenzfall dar. Aufgrund der Symmetrie der Absorption im Objekt kann aus den Messdaten einer Detektorhälfte die Information der anderen Halbseite errechnet werden. In diesem Fall ist die Querbewegung nicht erforderlich, obwohl das Objekt nicht vollständig im Strahlenfächer liegt. Somit können kleinere Detektoren und daraus resultierend auch kleiner bauende Röntgen-CT-Prüfanlagen für die Untersuchung von Objekten mit vorgegebener Größe verwendet werden. Dies führt gegenüber den Röntgen-CT-Prüfanlagen zu einer Kostenersparnis. Dadurch, dass der Prüfschlitten auf einer Messlinie **an einer Führung entlang einer Achse** verfahrbar ist, die unter einem Winkel schräg zu einer Zentralachse verläuft, die den Detektor zentral trifft, ist für die kleinen Objekte, die vollständig vom Fächerstrahl erfasst werden, eine feste Achse vorgegeben, auf der sie positioniert werden, was zu einer Erleichterung der Einstellung führt. Das Gleiche gilt auch für die größeren Objekte, bei denen der Prüfschlitten weiter außen in Richtung der Randachse positioniert ist und somit auch eine einfache Einstellung erfolgen kann. Durch die vorgegebene Messlinie, auf der der Prüfschlitten verfahren werden kann, wird die Mechanik der Prüfanlage vereinfacht.

Eine vorteilhafte Weiterbildung der Erfindung sieht vor, dass der Prüfschlitten zusätzlich entlang einer ersten Messlinie verfahrbar ist, die entlang der Zentralachse verläuft, und an dieser festlegbar ist. Die erste Messlinie dient dabei als Positionierachse. Die Rotationsachse muss nur an dem angefahrenen Punkt möglichst exakt so positioniert werden, dass sie senkrecht zur Ebene des Fächerstrahls steht. Dagegen muss sie dies bei einer Translations-Rotations-Tomographie während der gesamten Querbewegung der Rotationsachse sein.

Dadurch, dass der Prüfschlitten innerhalb der Ebene des Fächerstrahls zwei Freiheitsgrade aufweist, kann das zu prüfende Objekt immer an eine Position gefahren werden, in der das für sie passende Prüfverfahren, entweder eine Rotations-Tomographie oder ein Halbfächerverfahren, durchgeführt werden kann. Bei kleinen Teilen, die vollständig vom Strahlenfächer durchsetzt werden, kann die schnelle Rotations-Tomographie durchgeführt werden. Bei den größeren Teilen können diese so positioniert werden, dass das Halbfächerverfahren durchgeführt werden kann. Dies ist gegenüber dem bislang für so große Objekte durchgeführte Translations-Rotations-TomographieVerfahren auch bedeutend schneller. Außerdem muss keine Linearachse hoher Genauigkeit für die Querbewegung vorhanden sein.

Eine weitere vorteilhafte Weiterbildung der Erfindung sieht vor, dass nur eine Messlinie vorhanden ist, die sich von einem ersten Punkt an der Randachse zu einem zweiten Punkt auf der Zentralachse erstreckt. Dadurch wird nur noch eine einzige sehr kurze Messlinie benötigt, die für Objekte unterschiedlicher Größe verwendet werden kann. Dies vereinfacht die Mechanik der Prüfanlage nochmals und senkt somit deren Kosten.

Eine weitere vorteilhafte Weiterbildung der Erfindung sieht vor, dass der erste Punkt und/oder der zweite Punkt möglichst nahe am Detektor liegen, wobei gerade noch eine freie Rotation des Prüfschlittens mit darauf befestigtem, zu prüfenden Objekt möglich ist. Dies ist die optimale Ausgestaltung einer solchen schrägen kurzen Messlinie, da sie auf der Randachse die maximale Größe von Objekten zulässt, die in einem vorgegebenen Fokus-Detektor-System möglich ist und gleichzeitig auch die größtmöglichen kleinen Teile zulässt, die vollständig vom Fächerstrahl erfasst werden. Somit erfolgt eine optimale Kombination zur möglichst schnellen Prüfung sowohl kleiner erster Objekte, wie auch großer zweiter Objekte, sowohl nach dem Rotations-Tomographie- als auch nach dem Halbfächerverfahren.

Darüber hinaus wird die Aufgabe auch durch ein CT-Verfahren mit den Merkmalen des Patentanspruchs 5 gelöst. Dadurch, dass die Rotationsachse des Prüfschlittens zur Positionierung innerhalb des Fächerstrahls nahe an der Randachse räumlich fixiert wird, wobei das Objekt bei der Rotation um die Rotationsachse niemals über die andere Randachse hinaussteht, werden die oben schon zur erfindungsgemäßen Röntgen-CT-Anlage angegebenen Vorteile erreicht, nämlich die Möglichkeit, kleinere Detektoren und daraus resultierend auch kleiner bauende Röntgen-CT-Prüfanlage für die Untersuchung von Objekten mit vorgegebener Größe verwenden zu können. Dies führt gegenüber den bekannten Röntgen-CT-Verfahren zu einer Kostenersparnis. Dadurch, dass die Rotationsachse entlang der Messlinie **an einer Führung entlang einer Achse** verfahren wird, die unter einem Winkel **schräg** zur Zentralachse verläuft, und an einer Stelle zur Positionierung räumlich fixiert wird, an der das Objekt bei der Rotation um die Rotationsachse niemals über die andere Randachse hinaussteht. Dadurch kann immer das günstige Halbfächerverfahren angewandt werden mit den angegebenen Vorteilen. Außerdem muss die Rotationsachse nur an der Stelle, an der sie positioniert wurde für eine Prüfung des Objekts möglichst exakt senkrecht auf die Ebene des Fächerstrahls stehen.

Darüber hinaus wird die Aufgabe auch durch ein CT-Verfahren mit den Merkmalen des Patentanspruchs 6 gelöst. Dadurch, dass die Positionierung des Objekts von seiner Größe abhängt, können kleine erste Objekte so positioniert werden, dass sie vollständig vom Fächerstrahl durchsetzt werden, was zu einer sehr schnellen Prüfung dieser kleinen ersten Objekte führt. Darüber hinaus können größere zweite Objekte, die nicht vollständig vom Fächerstrahl durchsetzt werden, an der Randachse positioniert werden und ein Halbfächerverfahren durchgeführt werden. Auch dies ist ein gegenüber der Translations-Rotations-Tomographie bedeutend schnelleres Verfahren. Erfindungsgemäß muss lediglich gewährleistet werden, dass bei den größeren zweiten Objekten die Positionierung der Rotationsachse an der Randachse so ist, dass der Messkreis niemals über die andere Randachse hinausragt.

Eine vorteilhafte Weiterbildung der Erfindung sieht vor, dass ein erstes Objekt so weit vom Fokus entfernt auf der Zentralachse zur Prüfung angeordnet ist, dass es bei der gesamten Prüfung gerade nicht über den Fächerstrahl hinaussteht. Dadurch ist es möglich, mit der Rotations-Tomographie ein kleines erstes Objekt maximaler Größe zu tomographieren.

Eine weitere vorteilhafte Weiterbildung der Erfindung sieht vor, dass ein zweites Objekt so weit vom Fokus entfernt an der Randachse zur Prüfung angeordnet ist, dass es bei der gesamten Prüfung gerade nicht über die andere Randachse hinaussteht. Dadurch ist es möglich, dass mittels des Halbfächerverfahrens ein möglichst großes zweites Objekt tomographiert werden kann.

Eine weitere vorteilhafte Weiterbildung der Erfindung sieht vor, dass die Rotationsachse eines Objekts zur Prüfung auf einer Messlinie verfahren wird, die sich von einem ersten Punkt auf der Zentralachse, der so weit vom Detektor entfernt ist, dass sich ein erstes Objekt bei der Rotation kollisionsfrei am Detektor vorbei bewegen lässt, zu einem zweiten Punkt an der Randachse linear erstreckt, der so weit vom Detektor entfernt ist, dass sich ein zweites Objekt bei der Rotation kollisionsfrei am Detektor vorbei bewegen lässt. Dadurch wird - wie oben schon beschrieben - die Verwendung einer Prüfanlage ermöglicht, die eine möglichst einfache Mechanik aufweist, bei der nämlich der Prüfschlitten lediglich entlang einer Messlinie in Abhängigkeit von der Größe des zu untersuchenden Objekts verfahren werden muss.

Der erste Punkt ist so definiert, dass die Rotation des ersten Objekts noch kollisionsfrei zum Detektor erfolgt, und der zweite Punkt ist so definiert, dass die Rotation des zweiten Objekts gerade noch kollisionsfrei zum Detektor erfolgt. Dadurch wird - wie oben schon ausgeführt - die Messlinie so positioniert, dass möglichst große erste Objekte, die vom gesamten Fächerstrahl durchsetzt werden, und ebenso möglichst große zweite Objekte, die lediglich durch das Halbfächerverfahren tomographiert werden, in der gesamten Prüfanlage geprüft werden können. Dadurch hat die Prüfanlage ein möglichst großes Einsatzfeld.

Weitere Vorteile und Einzelheiten der Erfindung werden anhand der in den Figuren dargestellten, nachfolgend beschriebenen Ausführungsbeispiele erläutert. Dabei zeigen:
- Fig. 1: eine schematische Draufsicht auf eine Röntgen-CT-Prüfanlage,
- Fig. 2: eine schematische Draufsicht auf ein erstes Ausführungsbeispiel einer erfindungsgemäßen Röntgen-CT-Prüfanlage und
- Fig. 3: eine schematische Draufsicht auf ein zweites Ausführungsbeispiel einer erfindungsgemäßen Röntgen-CT-Prüfanlage.

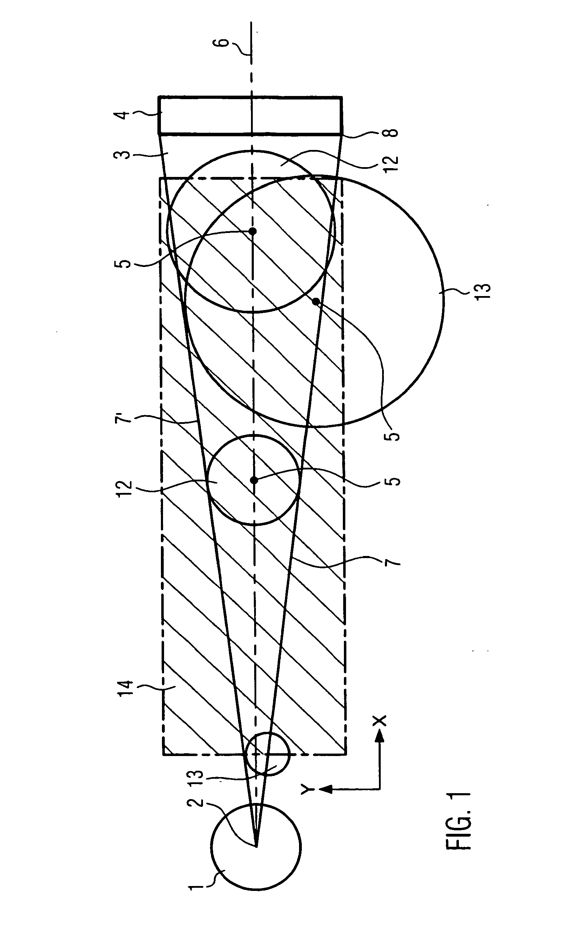

In Fig. 1 ist schematisch eine Draufsicht auf eine Röntgen-CT-Prüfanlage dargestellt. Eine Röntgenröhre 1 weist einen Fokus 2 auf, von dem ein Röntgenstrahl in Form eines Fächerstrahls 3 ausgeht. Dieser Fächerstrahl 3 trifft auf einen Detektor 4, der vollständig vom Fächerstrahl 3 ausgeleuchtet wird. Eine solche Anordnung ist aus der industriellen CT gut bekannt. Der Abstand zwischen Detektor 4 und Fokus 2 kann variiert werden, um eine möglichst gute Abbildungsgeometrie für ein zu prüfendes Objekt zu erreichen. Da durch den Fächerstrahl 3 nur eine dünne Scheibe in der Ebene des Fächerstrahls 3 des zu untersuchenden Objekts tomographiert werden kann, sind sowohl die Röntgenröhre 1 als auch der Detektor 4 in ihrer Höhe verfahrbar. Dabei wird schichtweise eine Durchleuchtung des zu prüfenden Objekts vorgenommen. Alternativ ist es auch möglich, das Objekt in seiner Höhe zu variieren oder eine Kombination aus beiden Verfahren.

Zwischen dem Fokus 2 und dem Detektor 4 ist ein Schlitten angeordnet, auf dem ein zu prüfendes Objekt festlegbar ist. Der Prüfschlitten rotiert um eine Rotationsachse 5, die senkrecht auf die Ebene des Fächerstrahls 3 steht. Dadurch werden Datensätze des Objekts unter verschiedenen Bestrahlungspfaden generiert. Aus diesen Datensätzen wird dann eine Rekonstruktion des zu prüfenden Objekts vorgenommen. Es handelt sich hierbei um eine zerstörungsfreie Analyse auf Fehler im zu untersuchenden Objekt, beispielsweise Fehler bei einem Gussteil.

Objekte verschiedener Größe weisen unterschiedlich große Messkreise 12, 13 auf. Ein Messkreis bestimmt sich zum einen aus der Form des Objekts und der Rotationsachse 5, um welche das Objekt bei der Prüfung rotiert wird. Der Radius des Messkreises 12, 13 entspricht dabei dem größten Abstand, den ein beliebiger Punkt des Objekts zur Rotationsachse 5 aufweist. Bei "rotationssymmetrischen" Felgen entspricht dies dem Radius der Felge, wenn die Felge so auf dem Prüfschlitten angebracht ist, dass ihr Mittelpunkt mit der Rotationsachse 5 zusammenfällt.

Bislang war es möglich, mittels eines Rotations-Tomographieverfahrens Objekte zu prüfen, deren Messkreis 12 vollständig im Fächerstrahl 3 lag. Dadurch war eine starke Beschränkung hinsichtlich der größtmöglichen Objekte gegeben, da die größtmöglichen Objekte lediglich mit einer sehr geringen Vergrößerung aufgenommen werden konnten, da sie in unmittelbarer Nähe des Detektors 4 angeordnet sein mussten. Für kleinere Objekte mit kleinerem Messkreis 12 war es dagegen möglich, diese entlang einer zentralen Achse 6 innerhalb des Fächerstrahls 3 auch in einem größeren Abstand zum Detektor 4 zu positionieren.

Um Objekte mit größeren Messkreisen 13 zu tomographieren, war es bislang nötig, die oben beschriebene Translations-Rotations-Tomographie zu verwenden, was zeitaufwändig und technisch aufwändiger zu realisieren war. Eine andere Möglichkeit für solche großen Objekte war es, ein Halbfächerverfahren zu verwenden.

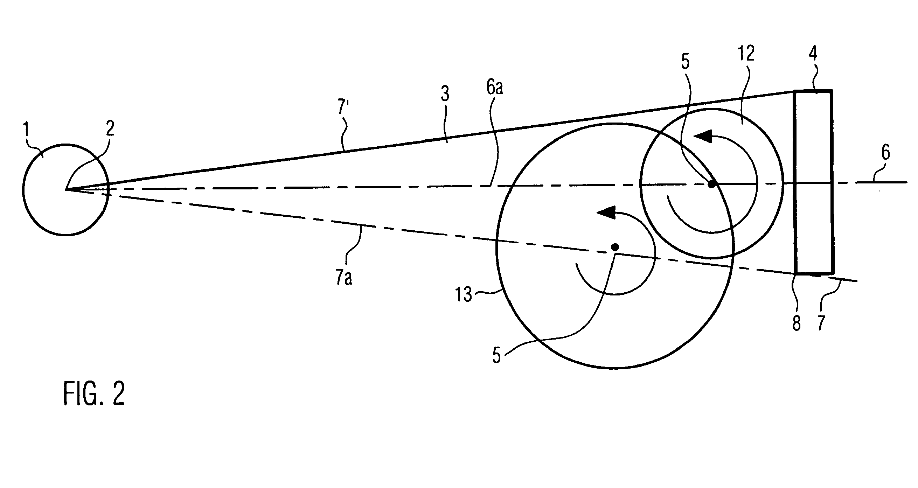

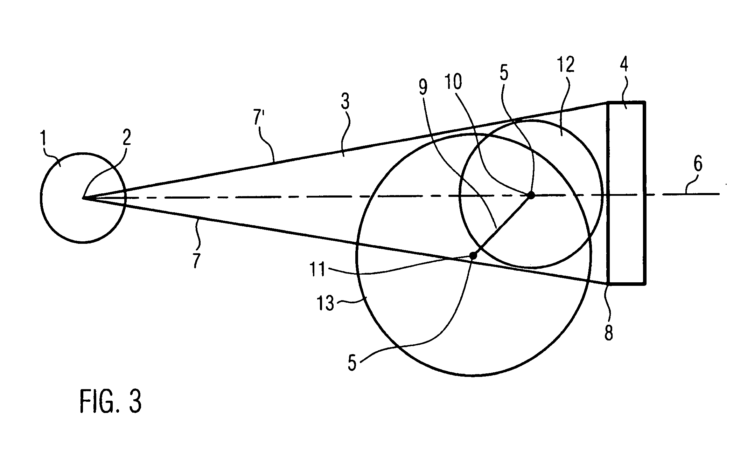

Die Erfindung gemäß der Fig. 2 und 3 eröffnet nunmehr die Möglichkeit, eine Rotations-Tomographie in derselben Röntgen-CT-Prüfanlage durchzuführen, wie ein Halbfächerverfahren. Dadurch ist es möglich, das geeignete Verfahren in Abhängigkeit von der Größe des Objekts und somit seines Messkreises 12, 13 jeweils individuell festzulegen. Um eine möglichst schnelle Messung zu erreichen, wird bei kleinen Objekten mit erstem Messkreis 12, der vollständig im Fächerstrahls 3 liegt, regelmäßig eine Rotations-Tomographie durchgeführt. Allerdings kann bei größeren solcher Objekte mit erstem Messkreis 12 auch ein Halbfächerverfahren durchgeführt werden, wenn die geometrischen Abbildungsvoraussetzungen dann im jeweiligen Anwendungsfall verbessert werden können. Dies ergibt sich daraus, dass bei einem Halbfächerverfahren ein Objekt mit vorgegebenem Messkreis 12, 13 näher am Fokus 2 angeordnet werden kann und trotzdem eine zuverlässige Durchleuchtung erfolgt.

Erreicht wird die Kombination der beiden unterschiedlichen Tomographieverfahren dadurch, dass der Prüfschlitten prinzipiell innerhalb eines Positionierbereichs 14 über zwei Freiheitsgrade X, Y bewegt werden kann. Der theoretisch mögliche Positionierbereich 14 ist in Fig. 1 schraffiert dargestellt. Dieser gibt lediglich die möglichen Positionierungen der Rotationsachse 5 an, wobei jedoch nicht alle im schraffierten Positionierbereich 14 liegenden Punkte auch tatsächlich angefahren werden können, um eine brauchbare Messung zu erhalten. Dies ergibt sich daraus, dass sich zumindest die Hälfte des Messkreises 13 innerhalb des Fächerstrahls 3 befinden muss. Somit sind lediglich Positionen für die Rotationsachse 5 möglich, die innerhalb des Fächerstrahls 3 - maximal knapp innerhalb der beiden Randachsen 7, 7' - liegen. Darüber hinaus muss gewährleistet sein, dass der jeweilige Messkreis 13 nur entweder über die Randachse 7 oder die andere Randachse 7' hinausragt, jedoch niemals über beide. Ansonsten müsste eine Translations-Rotations-Tomographie durchgeführt werden.

Mit der in Fig. 2 dargestellten erfindungsgemäßen Röntgen-CT-Prüfanlage ist es somit möglich, Objekte mit sehr unterschiedlich großen Messkreisen 12, 13 optimal hinsichtlich der gewünschten Abbildungsgeometrie zu positionieren und dann zu tomographieren. Eine Vorrichtung, auf der sich der Prüfschlitten bewegt, ist nicht erfindungswesentlich und darüber hinaus dem Fachmann aus dem Stand der Technik wohl bekannt, so dass hier nicht näher darauf eingegangen wird.

Die in Fig. 2 dargestellte erste Ausführungsform einer erfindungsgemäßen Röntgen-CT-Prüfanlage ist prinzipiell sehr ähnlich zu der in der Fig. 1 dargestellten Anlage aufgebaut. Im Folgenden wird deswegen nur auf die Unterschiede zu der Anlage der Fig. 1 näher eingegangen. Identische oder gleichwirkende Teile sind mit denselben Bezugszeichen versehen.

Der Hauptunterschied zwischen der Anlage der Fig. 1 und dem ersten erfindungsgemäßen Ausführungsbeispiel der Fig. 2 liegt darin, dass sich der jeweilige Prüfschlitten lediglich entlang zweier Achsen bewegen kann. Für kleine Objekte, die einen ersten Messkreis 12 aufweisen, der vollständig im Fächerstrahl 3 liegt, kann die Positionierung der Rotationsachse 5 entlang einer ersten Messlinie 6a erfolgen, die der Zentralachse 6 des Detektors 4 entspricht. Es versteht sich von selbst, dass die Rotationsachse 5 zum einen einen genügend großen Abstand zum Detektor 4 haben muss, damit das Objekt in oder entgegen der mit einem Pfeil dargestellten Richtung frei rotieren kann. Des Weiteren ist es für den Fachmann klar, dass die Rotationsachse 5 nur so nahe an den Fokus 2 heranrücken kann, dass sich der gesamte Messkreis 12 immer noch innerhalb des Fächerstrahls 3 befindet.

Für größere Objekte mit einem größeren zweiten Messkreis 13 kann eine Positionierung der Rotationsachse 5 auf einer zweiten Messlinie 7a erfolgen, die innerhalb des Fächerstrahls 3 und nahe an einer der beiden Randachsen 7, 7' verläuft. Die Randachse 7 ist die Achse, die vom Fokus 2 ausgeht und den Rand 8 des Detektors 4 trifft. Auch hier kann die Rotationsachse 5 nur so nahe an den Detektor 4 heranrücken, dass eine freie Rotation des zu prüfenden Objekts bei seiner Rotation in oder entgegen der durch einen Pfeil dargestellten Richtung möglich ist. Darüber hinaus kann die Rotationsachse 5 auch nur so nahe an den Fokus 2 heranrücken, dass der Messkreis 13 nicht über die andere Randachse 7' hinausragt. Ansonsten wäre es nötig, die aufwändige Translations-Rotations-Tomographie durchzuführen.

Mit einer Ausgestaltung gemäß dem zweiten Ausführungsbeispiel ist es noch einfacher möglich, eine mechanische Positionierung des jeweiligen Prüfschlittens vorzunehmen, da dieser lediglich entlang einer Achse, entweder der ersten Messlinie 6a oder der zweiten Messlinie 7a, bewegt werden muss. Die Ausführung der Führung des Prüfschlittens entlang einer Achse sowie die Möglichkeit der Festlegung an einem beliebigen Punkt dieser Achse ist nicht erfindungswesentlich und im Übrigen dem Fachmann wohl bekannt, so dass hier darauf verzichtet wird, nähere Einzelheiten auszuführen.

In Fig. 3 ist ein zweites erfindungsgemäßes Ausführungsbeispiel einer Röntgen-CT-Prüfanlage dargestellt. Seine grundlegende Konzipierung ist derjenigen des vorangegangenen Ausführungsbeispiels sehr ähnlich, so dass identische oder wirkungsgleiche Teile mit denselben Bezugszeichen ausgeführt sind. Im Folgenden wird lediglich auf die Unterschiede zu dem vorgenannten Ausführungsbeispiel eingegangen.

Anstatt dass der Prüfschlitten entlang zweier Messlinien 6a, 7a (siehe Fig. 2) gemäß dem ersten Ausführungsbeispiel bewegt werden kann, ist lediglich eine einzige kurze Messlinie 9 vorgegeben. Die Messlinie 9 erstreckt sich von einem zweiten Punkt 11 nahe der Randachse 7 zu einem ersten Punkt 10 der Zentralachse 6. Dabei ist der zweite Punkt 11 so gewählt, dass der zweite Messkreis 13 sich nicht mit dem Detektor 4 überschneidet, also eine kollisionsfreie Rotation des Objekts bei einer Rotation um die Rotationsachse 5, die sich auf dem zweiten Punkt 11 befindet, ermöglicht wird. Darüber hinaus gilt - wie beim vorangegangenen Ausführungsbeispiel - natürlich auch wieder, dass nur Objekte mit einem zweiten Messkreis 13 verwendet werden können, der nicht über die andere Randachse 7' hinausragt. Somit gibt die Wahl des zweiten Punkts 11 die größtmögliche Ausdehnung des zu prüfenden Objekts vor. Im dargestellten Ausführungsbeispiel wäre es möglich gewesen, den zweiten Punkt 11 noch ein Stück näher an den Detektor 4 heranzurücken. Dadurch wäre es möglich, Objekte mit einem noch größeren zweiten Messkreis 13 zu prüfen.

Der erste Punkt 10 wird so festgelegt, dass ein Messkreis 12 eines zu prüfenden Objekts sich nicht mit dem Detektor 4 überschneidet und gleichzeitig nicht über die Randachsen 7, 7' hinausragt. Durch die Wahl dieses ersten Punktes 10 wird die Größe der Objekte begrenzt, die mit der besonders schnell durchzuführenden Rotations-Tomographie geprüft werden können. Im dargestellten Ausführungsbeispiel ist der erste Messkreis 12 beinahe größtmöglich ausgelegt. Es wäre möglich, noch ein kleines Stück mit dem ersten Punkt 10 in Richtung des Detektors 4 zu gehen und somit noch ein wenig größere Objekte mittels der Rotations-Tomographie zu durchleuchten.

Es wäre natürlich genauso gut möglich, sowohl den ersten Punkt 10 als auch den zweiten Punkt 11 weiter weg vom Detektor, also auf den Fokus 2 zu, festzulegen. Dadurch erhält man eine andere Abbildungsgeometrie mit einer größeren Vergrößerung, wobei jedoch die größte Größe des ersten Messkreises 12 sowie des zweiten Messkreises 13 verringert würde. Unter Umständen ist dies jedoch ausreichend, weil die zu prüfenden Objekte gar nicht eine maximale Größe des jeweiligen Messkreises 12, 13 zwingend nötig machen. Es kann somit individuell die Ausrichtung der Messlinie 9 in Abhängigkeit der Verteilung der Größen der unterschiedlich großen, zu messenden Objekte gewählt werden. Dadurch steht eine Prüfanlage sowie ein Verfahren zur Verfügung, mit dem sehr einfach mit geringem mechanischen Aufwand eine optimale Prüfung unterschiedlich großer Objekte erzielt werden kann.

Es versteht sich von selbst, dass ein bestimmtes Objekt überall entlang der Messlinie 9 positioniert werden kann, um die Prüfung vorzunehmen. Das Objekt muss dabei lediglich die Voraussetzung erfüllen, dass der dazugehörige Messkreis 13 nicht über die andere Randachse 7' hinausragt.

Als Vorteil ergibt sich bei dem dargestellten zweiten Ausführungsbeispiel, dass die schräg zum Zentralstrahl 6 ausgerichtete Messlinie 9 dazu führt, dass ein geringer Abstand zwischen Fokus 2 und Detektor 4 gewählt werden kann und somit eine kompakte Bauweise der Röntgen-CT-Prüfanlage gegeben ist.

Für den Fachmann ist es klar, dass die Erfindung und insbesondere die zwei dargestellten Ausführungsbeispiele auch mit einem Kegelstrahl anstatt eines Fächerstrahls 3 ausgeführt werden kann. Dann kann unter Umständen sogar auf eine schichtenweise Durchleuchtung des Objekts verzichtet werden, sofern das Objekt vollständig im Kegelstrahl enthalten ist. Anstatt eines eindimensionalen Detektors 4 wird dann ein meist rechteckiger zweidimensionaler Detektor benutzt. Dies ist allerdings aus dem Stand der Technik gut bekannt und muss somit hier nicht näher beschrieben werden.

Es sei noch angemerkt, dass insbesondere eine Ausgestaltung gemäß dem ersten Ausführungsbeispiel der Figur 2 auch nur eine Bewegung des Prüfschlittens entlang der Randachse 7, 7' zulassen kann. Zur Prüfung wird der Prüfschlitten dann fixiert und das Objekt um die Rotationsachse 5 rotiert, die möglichst exakt senkrecht auch die Ebene des Fächerstrahls 3 justiert wird. Im Extremfall kann es auch sinnvoll sein, gar keine Bewegung des Prüfschlittens zuzulassen. Die Rotationsachse 5 ist dann nur an einer einzigen Stelle für eine Prüfung zu fixieren. Dadurch wird ein sehr einfacher Aufbau der Röntgen-CT-Anlage gewährleistet, bei der das Halbfächerverfahren mit den bekannten Vorteilen durchgeführt werden kann.

### Bezugszeichenliste

- 1: Röntgenröhre
- 2: Fokus '
- 3: Fächerstrahl
- 4: Detektor
- 5: Rotationsachse
- 6: Zentralachse
- 6a: erste Messlinie
- 7: Randachse
- 7': andere Randachse
- 7a: zweite Messlinie
- 8: Rand des Detektors
- 9: Messlinie
- 10: erster Punkt
- 11: zweiter Punkt
- 12: erster Messkreis
- 13: zweiter Messkreis
- 14: Positionierbereich
- X: Freiheitsgrad
- Y: Freiheitsgrad

## Patentansprüche

1. Röntgen-CT-Prüfanlage mit einer Röntgenröhre (1) mit einem Fokus (2), die einen Fächerstrahl (3) oder einen Kegelstrahl erzeugt, der einen Detektor (4) in einem festen Abstand zum Fokus (2) vollständig ausleuchtet, und mit einem Prüfschlitten zur Aufnahme eines zu prüfenden Objekts, der eine senkrecht zum Fächerstrahl (3) rotierbare Rotationsachse (5) aufweist,
**dadurch gekennzeichnet, dass**
die Rotationsachse (5) des Prüfschlittens innerhalb des Fächerstrahls (3) auf einer Messlinie (7a; 9) an einer Führung entlang einer Achse verfahrbar ist, die unter einem Winkel zu einer Zentralachse (6) zwischen Röntgenröhre (1) und Detektor (4), die den Detektor (4) zentral trifft, verläuft, wobei die Messlinie (7a; 9) schräg zur Zentralachse (6) ausgerichtet ist,
und wobei der Prüfschlitten an einem beliebigen Punkt auf der Messlinie festlegbar ist.

2. Röntgen-CT-Prüfanlage nach Patentanspruch 1, **dadurch gekennzeichnet, dass** der Prüfschlitten zusätzlich entlang einer ersten Messlinie (6a) verfahrbar ist, die entlang der Zentralachse (6) verläuft, und an dieser festlegbar ist.

3. Röntgen-CT-Prüfanlage nach Patentanspruch 1, **dadurch gekennzeichnet, dass** nur eine Messlinie (9) vorhanden ist, die sich von einem ersten Punkt (10) an einer Randachse (7) des Fächerstrahls (3) zu einem zweiten Punkt (11) auf der Zentralachse (6) erstreckt.

4. Röntgen-CT-Prüfanlage nach Patentanspruch 3, **dadurch gekennzeichnet, dass** der erste Punkt (10) und/oder der zweite Punkt (11) möglichst nahe am Detektor (4) liegen, wobei gerade noch eine freie Rotation des Prüfschlittens mit darauf befestigtem, zu prüfenden Objekt möglich ist.

5. CT-Verfahren zur Prüfung von Objekten mittels einer Röntgen-CT-Prüfanlage nach einem der vorstehenden Patentansprüche, wobei das Objekt auf dem Prüfschlitten festlegbar ist und nach der Positionierung des Prüfschlittens zur Prüfung um die Rotationsachse (5) des Prüfschlittens rotiert wird,
und wobei
die Rotationsachse (5) des Prüfschlittens innerhalb des Fächerstrahls (3) entlang der Messlinie (7a; 9) an einer Führung entlang einer Achse verfahren wird, die unter einem Winkel zu einer Zentralachse (6) zwischen Röntgenröhre (1) und Detektor (4), die den Detektor (4) zentral trifft, verläuft, wobei die Messlinie (7a; 9) schräg zur Zentralachse (6) ausgerichtet ist,
und wobei der Prüfschlitten an einem beliebigen Punkt auf der Messlinie festlegbar ist, so dass das Objekt bei der Rotation um die Rotationsachse (5) niemals über die andere Randachse (7') des Fächerstrahls hinaussteht.

6. CT-Verfahren zur Prüfung von Objekten unterschiedlicher Größe mittels einer Röntgen-CT-Prüfanlage nach einem der vorstehenden Patentansprüche,
**dadurch gekennzeichnet, dass**
die Positionierung des Objekts von seiner Größe abhängt und das Objekt nach der Positionierung zur Prüfung um die Rotationsachse (5) des Prüfschlittens rotiert wird, wobei
- die Rotationsachse (5) bei ersten Objekten, deren Größe so klein ist, dass sie bei der Rotation um die Rotationsachse (5) vollständig vom Fächerstrahl (3) bzw. Kegelstrahl erfasst werden, auf der Zentralachse (6) positioniert wird;
- die Rotationsachse (5) mittels des Prüfschlittens bei größeren zweiten Objekten zwischen der Zentralachse (6) und der Randachse (7) so positioniert wird, dass der Abstand der Rotationsachse (5) vom Fokus (2) so groß ist, dass das zweite Objekt bei der Rotation um die Rotationsachse (5) niemals über die andere Randachse (7') hinaussteht.

7. CT-Verfahren nach Patentanspruch 6, **dadurch gekennzeichnet, dass** ein erstes Objekt so weit vom Fokus (2) entfernt auf der Zentralachse (6) zur Prüfung angeordnet wird, dass es bei der gesamten Prüfung gerade nicht über den Fächerstrahl (3) hinaussteht.

8. CT-Verfahren nach einem der Patentansprüche 6 oder 7 **dadurch gekennzeichnet, dass** ein zweites Objekt so weit vom Fokus (2) entfernt auf der Randachse (7) zur Prüfung angeordnet wird, dass es bei der gesamten Prüfung gerade nicht über die andere Randachse (7') hinaussteht.

9. CT-Verfahren nach einem der Patentansprüche 6 bis 8, **dadurch gekennzeichnet, dass** die Rotationsachse (5) eines Objekts zur Prüfung auf einer Messlinie (9) verfahren wird, die sich von einem ersten Punkt (10) auf der Zentralachse (6), der so weit vom Detektor (4) entfernt ist, dass sich ein erstes Objekt bei der Rotation kollisionsfrei am Detektor (4) vorbei bewegen lässt, zu einem zweiten Punkt (11) an der Randachse (7) linear erstreckt, der so weit vom Detektor (4) entfernt ist, dass sich ein zweites Objekt bei der Rotation kollisionsfrei am Detektor (4) vorbei bewegen lässt.

## Claims

1. X-ray CT examination installation, with an X-ray tube (1) with a focus (2), which creates a fan beam (3) or a conical beam which X-rays the whole of a detector (4) at a fixed distance from the focus (2), and with an examination carriage, for recording an object to be examined, which has an axis of rotation (5) rotatable perpendicular to the fan beam (3),
**characterized in that**,
the axis of rotation (5) of the examination carriage within the fan beam (3), is movable at a leading element along a measuring line (7a; 9) which runs at an angle to the central axis (6) between X-ray tube (1) and detector (4), which meets the detector (4) centrally, wherein the measuring line (7a; 9) ist adjusted angular to the central axis (6) and wherein the examination carriage can be fixed at any point on the measuring line.

2. X-ray CT examination installation according to claim 1, **characterized in that** the examination carriage can also be moved along a first measuring line (6a) which runs along the central axis (6) and can be fixed to same.

3. X-ray CT examination installation according to claim 1, **characterized in that** there is only one measuring line (9) which extends from a first point (10) at an edge axis (7) of the fan beam (3) to a second point (11) on the central axis (6).

4. X-ray CT examination installation according to claim 3, **characterized in that** the first point (10) and/or the second point (11) lie as close as possible against the detector (4), wherein a free rotation of the examination carriage with an object to be examined secured thereon is only just still possible.

5. CT method of examining objects by means of an X-ray CT examination installation according to one of the previous claims, wherein, after positioning of the examination carriage for examination, the object can be fixed on the examination carriage and is rotated about the axis of rotation (5) of the examination carriage, and wherein the axis of rotation (5) of the examination carriage within the fan beam (3), is moved at a leading element along the measuring line (7a; 9) which runs at an angle to the central axis (6) between X-ray tube (1) and detector (4), which meets the detector (4) centrally, wherein the measuring line (7a; 9) is adjusted angular to the central axis (6),
and wherein the examination carriage can be fixed at any point on the measuring line, so that during rotation about the axis of rotation (5), the object never projects beyond the other edge axis (7') of the fan beam.

6. CT method of examining objects of various sizes by means of an X-ray CT examination installation according to one of the previous claims,
**characterized in that**
the positioning of the object depends on its size and, after positioning for examination, the object is rotated about the axis of rotation (5) of the examination carriage, wherein
- the axis of rotation (5), in the case of first objects which are so small that they are wholly covered by the fan beam (3) or conical beam during the rotation about the axis of rotation (5), is positioned on the central axis (6);
- the axis of rotation (5), in the case of larger second objects, is positioned by means of the examination carriage between the central axis (6) and the edge axis (7) such that the distance between the axis of rotation (5) and the focus (2) is so great that the second object never projects beyond the other edge axis (7') during the rotation about the axis of rotation (5).

7. CT method according to claim 6, **characterized in that** a first object is arranged for examination so remote from the focus (2) on the central axis (6) that it just fails to project beyond the fan beam (3) throughout the examination.

8. CT method according to one of claims 6 or 7 **characterized in that** a second object is arranged for examination so remote from the focus (2) on the edge axis (7) that it just fails to project beyond the other edge axis (7') throughout the examination.

9. CT method according to one of claims 6 to 8, **characterized in that** the axis of rotation (5) of an object for examination is moved on a measuring line (9) which extends linearly from a first point (10) on the central axis (6) which is so remote from the detector (4) that during rotation a first object can be moved without colliding past the detector (4) to a second point (11) on the edge axis (7), which is so remote from the detector (4) that during rotation a second object can be moved without colliding past the detector (4).

## Revendications

1. Installation d'examen par radiographie CT équipée d'un tube à rayons X (1) avec un foyer (2), ladite installation générant un faisceau en éventail (3) ou un faisceau conique éclairant entièrement un détecteur (4) à une distance fixe par rapport au foyer (2), et équipée d'un coulisseau de contrôle permettant de radiographier d'un objet à examiner, ledit coulisseau comportant un axe de rotation (5) pouvant tourner perpendiculairement au faisceau en éventail (3) ;
**caractérisée en ce que** :
l'axe de rotation (5) du coulisseau de contrôle peut être déplacé dans le cadre du faisceau en éventail (3) situé sur une ligne de mesure (7a ; 9) disposée contre un guide, le long d'un axe, ladite ligne s'étendant selon un certain angle par rapport à un axe central (6) rencontrant de façon centrale le détecteur (4) entre le tube à rayons X (1) et le détecteur (4), la ligne de mesure (7a ; 9) étant orientée obliquement par rapport à l'axe central (6) ;
et le coulisseau de contrôle pouvant être immobilisé en un point quelconque sur la ligne de mesure.

2. Installation d'examen par radiographie CT selon la revendication 1, **caractérisée en ce que** le coulisseau de contrôle peut en outre être déplacé le long d'une première ligne de mesure (6a) s'étendant le long de l'axe central (6) et peut être immobilisé sur elle.

3. Installation d'examen par radiographie CT selon la revendication 1, **caractérisée en ce qu'**il y a une seule ligne de mesure (9) qui s'étend d'un premier point (10) situé au niveau d'un axe de bordure (7) du faisceau en éventail (3) à un deuxième point (11) situé sur l'axe central (6).

4. Installation d'examen par radiographie CT selon la revendication 3, **caractérisée en ce que** le premier point (10) et/ou le deuxième point (11) se situent le plus près possible du détecteur (4), une rotation libre du coulisseau de contrôle restant possible avec l'objet à examiner immobilisé dessus.

5. Procédé d'examen CT d'objets à l'aide d'une installation d'examen par radiographie CT selon l'une quelconque des revendications précédentes, l'objet pouvant être immobilisé sur le coulisseau de contrôle et étant tourné autour de l'axe de rotation (5) en fonction de la position du coulisseau de contrôle ; et
l'axe de rotation (5) du coulisseau de contrôle pouvant être déplacé dans le cadre du faisceau en éventail (3), le long de la ligne de mesure (7a ; 9) située contre un guide, le long d'un axe, ladite ligne rencontrant le détecteur (4) de façon centrale et s'étendant selon un certain angle par rapport à l'axe central (6) entre le tube à rayons X (1) et le détecteur (4), la ligne de mesure (7a ; 9) étant orientée de façon oblique par rapport à l'axe central (6) ; et le coulisseau de contrôle pouvant être immobilisé en un point quelconque sur la ligne de mesure, de façon à ce que l'objet ne puisse jamais ressortir au-delà de l'autre axe de bordure (7') du faisceau en éventail lors de la rotation autour de l'axe de rotation (5).

6. Procédé d'examen CT d'objets de différentes tailles à l'aide d'une installation d'examen par radiographie CT selon l'une quelconque des revendications précédentes ;
**caractérisé en ce que** :
le positionnement de l'objet dépend de sa taille et que l'objet est tourné pour examen autour de l'axe de rotation (5) du coulisseau de contrôle en fonction de sa position ;
l'axe de rotation (5) des premiers objets dont la taille est si petite qu'ils peuvent être entièrement mesurés par le faisceau en éventail (3) et/ou par le faisceau conique lors de la rotation autour de l'axe de rotation (5) étant positionné sur l'axe central (6) ;
l'axe de rotation (5) des deuxièmes objets de plus grande taille étant positionné de telle sorte entre l'axe central (6) et l'axe de bordure (7) avec le coulisseau de contrôle que la distance entre l'axe de rotation (5) et le foyer (2) est suffisante pour que le deuxième objet ne ressorte jamais au-delà de l'autre axe de bordure (7') lors de la rotation autour de l'axe de rotation (5).

7. Procédé CT selon la revendication 6, **caractérisé en ce qu'**un premier objet est disposé à une distance telle du foyer (2) sur l'axe central (6) pour l'examen qu'il ne ressort pas du faisceau en éventail (3) pendant l'ensemble de l'examen.

8. Procédé CT selon l'une quelconque des revendications 6 ou 7, **caractérisé en ce qu'**un deuxième objet est disposé à une distance telle du foyer (2) sur l'axe de bordure (7) pour l'examen qu'il ne ressort pas de l'autre axe de bordure (7') pendant l'ensemble de l'examen.

9. Procédé CT selon l'une quelconque des revendications 6 à 8, **caractérisé en ce que** l'axe de rotation (5) d'un objet est déplacé pour examen sur une ligne de mesure (9) qui s'étend de façon linéaire d'un premier point (10) situé sur l'axe central (6), si éloigné du détecteur (4) qu'un premier objet peut être déplacé sans heurt au niveau du détecteur (4), à un deuxième point (11) situé au niveau de l'axe de bordure (7) linéaire, si éloigné du détecteur (4) qu'un deuxième objet peut être déplacé sans heurt au niveau du détecteur (4) lors de la rotation.
